# EUROPEAN PATENT SPECIFICATION

(11) **EP 0 521 583 B1**
(45) Date of publication and mention of the grant of the patent: **19.10.1994**
(21) Application number: 92202033.4
(22) Date of filing: 03.07.1992
(51) Int. Cl.: B01D 17/028, B01D 21/00, B29C 69/00

(54) **Method for manufacturing separators**
Herstellungsverfahren für Trennvorrichtungen
Méthode pour la fabrication de séparateurs

(30) Priority: 04.07.1991 NL 9101167
(43) Date of publication of application: 07.01.1993
(73) Proprietor: ASTRACO BEHEER B.V., 2172 JB Sassenheim (NL)
(72) Inventor: Assen, Harry, NL-2172 JB Sassenheim (NL)
(74) Representative: Hoorweg, Petrus Nicolaas

(56) References cited:
- EP-A- 0 001 866
- EP-A- 0 004 538
- EP-A- 0 232 217
- FR-A- 2 386 328
- GB-A- 2 177 062
- US-A- 2 613 811
- AUFBEREITUNGS-TECHNIK vol. 16, no. 10, 1975, pages 524 - 529 SCHLITTER 'LAMELLENEINDICKER NACH DEM QUERSTROM-PRINZIP'

## Description

The invention relates to a method for manufacturing a housing suitable for a device for separating constituents out of a liquid, said housing having an inlet and outlet opening, and an array of parallel plates placed at a mutual distance and arranged between this inlet and outlet opening, which plates stand at a predetermined angle to the horizontal, and means for feeding the liquid to a housing and for discharging the sludge, said method steps starting from a tube of suitable material.

Such a method is known from FR-A-2 386 328.

A housing of such a device, known commercially as a plate separator, is normally given a quite robust form because the quantity of water in which the constituents are found can be rather large. Given the flat-walled housing in which the plates are received, the flat walls must be stiffened with stiffening ribs, which considerably increases the weight. The cost price of such a device increases with the weight.

The invention has for its object to provide a method as described in the preamble according to which a housing is simple to manufacture and therefore less expensive, wherein the variation in capacity can be adapted in simple manner.

The method according to the invention is distinguished in that
- the tube is cut through along a plane lying at an angle that is half a predetermined angle to the centre line,
- the housing parts are rotated through 180° relative to one another,
- the edge portions of the tube are mutually adhered, and erecting said housing such that the centre line of the lower housing part stands vertically or practically vertically and the centre line of the upper housing part is placed at said predetermined angle, in which upper housing part the array of plates is to be received.

The starting point can therefore be a single tube which can be formed into a definitively angled housing part by a simple sawing or grinding operation and a subsequent adhering operation such as welding. If desired the collecting body can also be wound from the same band. Created in this manner is a housing part that is particularly simple to manufacture into which the plates are placed, resulting in a device that is extremely flexible and inexpensive to make.

The housing can be manufactured from commercially available tubular material.

However, the method according to the invention is further distinguished in that a band is wound overlapping round a core, wherein the edge strips of the band are mutually adhered at the overlap,
- the core is removed,
- the obtained tube is cut through along a plane lying at half the prescribed angle to the centre line,
- the housing parts are turned through 180° relative to one another,
- and the edge portions are adhered to each other.

Because the housing part is circular in cross section the wall of the housing does not require further reinforcement with extra ribs. The capacity can be simply adapted by adjusting the length and/or diameter of the tube to the desired capacity.

The housing can also be extended very simply with a collection chamber for the separated constituents in the liquid, which constituents usually sink downward. For this purpose the lower housing part is connected to a body provided with a space narrowing towards the bottom. This body collects the constituents and carries them to a discharge point, thus achieving an exceptionally efficient operation.

The body is preferably thin-walled if use is made of a separate supporting frame. If use is made of a foundation block it is recommended to give the foundation block a solid form with the space recessed therein.

Above mentioned and other features of the invention will be further elucidated in the figure description hereinbelow of a number of embodiments. In the drawing:
fig. 1 shows a perspective standing view of a first embodiment of the device according to the invention,
fig. 2 shows a cross section along the line II-II in fig. 1,
fig. 3 is a perspective standing view of a second embodiment, wherein the housing part is depicted at a distance from a foundation,
fig. 4 shows a perspective standing view of a third embodiment of the device,
fig. 5 shows a perspective view of a possible method of manufacturing the housing parts as according to any of the foregoing figures.

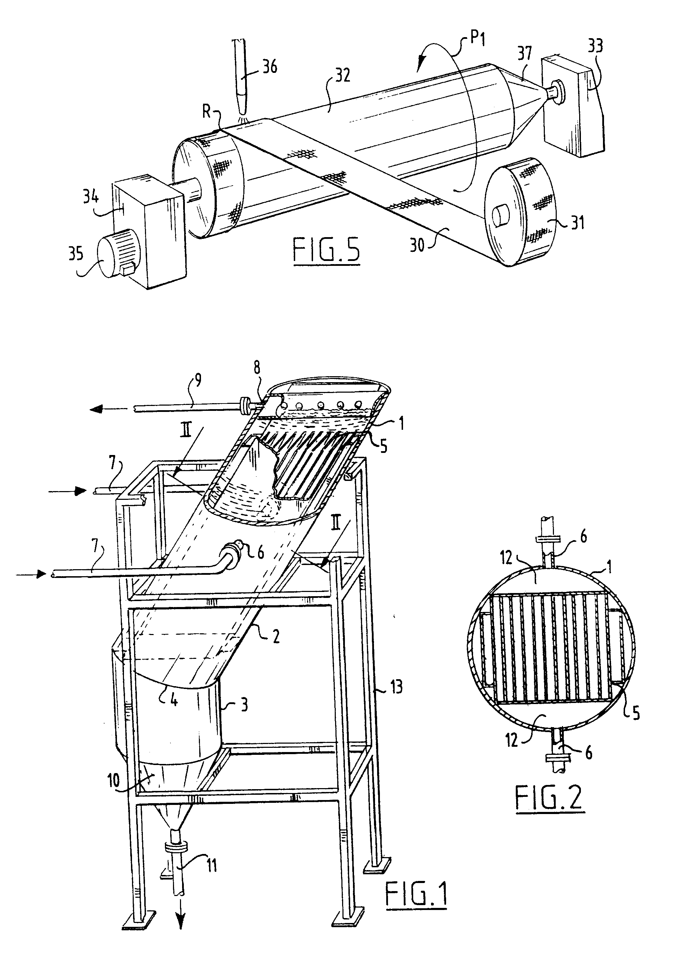

Designated with the numeral 1 is a housing of circular cross section which consists of an upper housing part 2 and a lower housing part 3. The diameter of both housing parts is the same and the adjoining edge joins 4 of the housing parts lie in a plane forming the bisector of the angle which the centre line or a describer of the upper housing part 1 makes with the vertical. Arranged in the upper housing part is an array of plates 5 forming a laminated group, the cross section of which is shown in fig. 2.

Arranged half-way along the side of housing part 2 is an inlet opening 6 to which is connected a feed pipe 7. A similar feed pipe with connecting opening can if desired also be arranged on the other side. At the top an outlet opening 8 is arranged in the wall of the upper housing part 2, onto which opening connects a drain pipe 9.

Connecting onto the underside of the lower housing part 3 is a collecting container in the form of a conical body 10, to the bottom of which is fixed a drain pipe 11.

The housing parts 2, 3 and collecting body 10 are supported in a frame 13 consisting of a rectangular system of profiles suitable for bearing the weight of the housing parts 2, 3 and 10 in addition to that of the water quantity and the sludge.

The operation of the device shown is as follows. Through feeding contaminated water via pipe 7 and inlet opening 6 a quantity of water enters the upper housing part 2 in the chamber 12 adjacent the array of plates. The water sinks towards the lower housing part 3 and rises upward via the plates of the array 5 into the upper housing part and flows away via the outlet opening 8 via the drain pipe 9.

Through correct adjustment of the flow rate, the contaminants present in the water, which may or may not be flocculated by a flocking agent, will sink downward as a result of the force of gravity onto the sloping plates 5. When sufficient particles have been deposited the layer of contaminated particles will slide downward along the upper side of each plate of the array 5 and drop into the lower housing part 3. On arrival there they will be collected in the conical body 10 and can be discharged via drain pipe 11. This method of the plate separator is per se known.

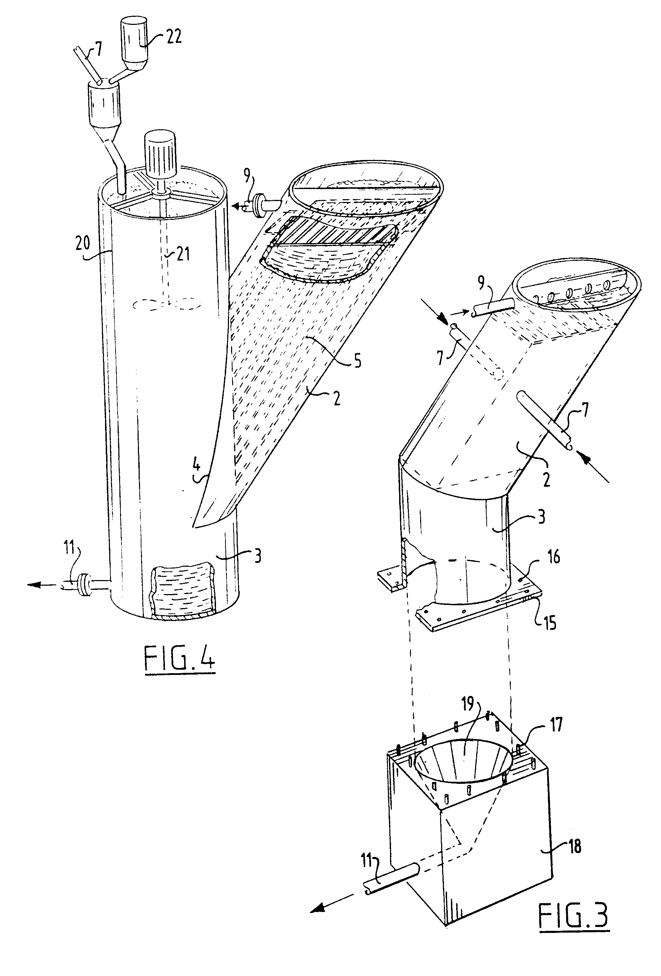

Fig. 3 shows a variant of the device wherein the upper housing part 2 and the lower housing part 3 connect to one another in a similar manner to fig. 1. The feed pipes 7 and drain pipe 9 are arranged in identical manner.

Connecting onto the bottom edge of the lower housing part 3 is, however, not a conical body 10 but a flange plate 15 which is provided with through-holes 16 through which can be arranged fastening bolts 17. These latter form part of a solid body 18 in which a conical space 19 is recessed. The conical space connects at the bottom onto the drain pipe 11.

Because of the solid embodiment of the block body 18, this latter can serve simultaneously as foundation means. The construction of the present device can therefore be embodied in very simple manner.

Fig. 4 shows a third variant wherein the upper housing part 2 stands, as in the preceding figures, at a determined angle to the vertical. In this embodiment the lower housing part 3 is extended upward in a part 20 in which a stirring means 21 is accommodated. The device is provided with a supply container 22 for a flocking agent. The feed pipe 7 for the contaminated water debouches in a mixer in which the water is mixed with the flocking agent. The upper housing part 2 is again provided with a drain pipe 9, as in the foregoing embodiments, wherein the array of plates 5 likewise remains accommodated in this housing part. The lower housing part is further embodied with a horizontal drain pipe 11.

The operation of this embodiment is that the contaminated water is not fed into the side part of the upper housing part 2 but into the extended part 20 of the lower housing part 3. Due to the flocking agent from container 22 and the stirring means 21 the contaminating constituents which sink downward in the vertical shaft of the housing part can be flocculated. The draining of water again takes place via the array of plates 5 and the water can ultimately be drained in cleaned state via pipe 9.

The housing parts according to the three embodiments shown above are simple to make starting from commercially available tubular material. The starting material can also be a band 30, see fig. 5, which is pulled from a reel 31 and which is wound onto a core 32 by causing this core to rotate in the direction of the arrow P1. To this end the core is mounted on the right-hand side in a bearing block 33 and on the left-hand side in a gearbox 34 to which is connected a motor 35.

By winding the band 30 such that the edge portions mutually overlap, the edge R can be subjected to an adhesion to the preceding wind by means of a heating treatment by the lance 36, so that a closed tube is eventually formed around the core 32. The core can also be embodied with a conically formed end portion 37 around which the band, with some adjustments, can likewise be wound. Thus resulting after removal of the core 32 is a hollow cylindrical body that has only to be cut through at a determined position along a plane corresponding with the bisector plane as described with reference to fig. 1. Rotation of the two housing parts through 180° relative to one another and mutual adhesion of the cut edges 4 can result in a housing as according to fig. 1 and 3.

The housing according to fig. 4 can also be manufactured by starting with two tubular portions wound for example as in fig. 5, which are respectively cut out in fitting manner so that the edge portions 4 can be welded together.

The invention is not limited to the above described embodiment.

## Claims

1. Method for manufacturing a housing suitable for a device for separating constituents out of a liquid, said housing (1) having an inlet (6) and outlet (8) opening, and an array of parallel plates (5) placed at a mutual distance and arranged between this inlet and outlet opening, which plates stand at a predetermined angle to the horizontal, and means (7 and 11 respectively) for feeding the liquid to a housing and for discharging the sludge, said method steps starting from a tube of suitable material, **characterized in that**
- the tube is cut through along a plane lying at an angle that is half said predetermined angle to the centre line,
- the housing parts are rotated through 180° relative to one another,
- the edge portions (4) of the tube are mutually adhered, and erecting said housing (1) such that the centre line of the lower housing part (3) stands vertically or practically vertically and the centre line of the upper housing part (2) is placed at said predetermined angle, in which upper housing part the array of plates (5) is to be received.

2. Method as claimed in claim 1, **characterized in that** in order to obtain the tube a band (30) is wound overlapping round a core (32),
- the edge strips of the band (30) lying one on the other are mutually adhered,
- the core (32) is removed,

3. Method as claimed in claim 2, wherein said housing (1) is provided with a thin walled body (10) provided with a space narrowing towards the bottom, said body being adhered to the lower extremity of the lower housing part (3), **characterized in that** the thin-walled body (10) is formed simultaneously with the tubular housing from the wound band.

4. Method as claimed in claim 1, wherein the housing is erected and placed upon a solid rectangular block (18) having a recess (19) narrowing towards the bottom.

5. Method as claimed in claim 2 or 3, **characterized in that** the band (30) is manufactured from a plastic material.

6. Method as claimed in claim 2 or 3, **characterized in that** the band (30) consists of metal.

## Patentansprüche

1. Verfahren zum Herstellen eines für eine Vorrichtung zum Trennen von Bestandteilen aus einer Flüssigkeit geeigneten Gehäuses (1) mit einer Einlaß- (6) und einer Auslaßöffnung (8) und mit einer Anordnung aus parallelen Platten (5), die im Abstand zueinander und zwischen der Einlaß- und Auslaßöffnung angeordnet sind, wobei die Platten in einem vorgegebenen Winkel zur Horizontalen positioniert sind, und mit Mitteln (7 bzw. 11) zum Zuführen der Flüssigkeit zu einem Gehäuse und zum Abführen des Schlamms, wobei die Verfahrensschritte bei einem Rohr aus geeignetem Material beginnen,
dadurch gekennzeichnet, daß
- das Rohr entlang einer Ebene geschnitten ist, welche in einem Winkel angeordnet ist, der dem halben vorgegebenen Winkel zur Mittellinie entspricht,
- die Gehäuseteile um 180° relativ zueinander gedreht werden,
- die Randbereiche (4) des Rohrs aneinanderhaften und das Gehäuse (1) derart aufrichten, daß die Mittellinie des unteren Gehäuseteils (3) vertikal oder praktisch vertikal und die Mittellinie des oberen Gehäuseteils (2) mit dem vorgegebenen Winkel ausgerichtet sind, wobei die Plattenanordnung (5) in dem oberen Gehäuseteil aufnehmbar ist.

2. Verfahren nach Anspruch 1, dadurch gekennzeichnet, daß ein Band (30) um einen Kern (32) überlappend gewickelt ist,
- die übereinanderliegenden Randstreifen des Bandes (30) miteinander verklebt werden, und
- der Kern (32) entfernt wird, so daß das Rohr gebildet wird.

3. Verfahren nach Anspruch 2, wobei das Gehäuse (1) mit einem dünnwandigen Körper (10) versehen ist, der mit einem in Richtung des Bodens verjüngenden Raum ausgestaltet ist, wobei der Körper an das untere Ende des unteren Gehäuseteils (3) geklebt wird,
dadurch gekennzeichnet, daß der dünnwandige Körper (10) gleichzeitig mit dem rohrförmigen Gehäuse aus dem gewickelten Band gebildet wird.

4. Verfahren nach Anspruch 1, dadurch gekennzeichnet, daß das Gehäuse aufgerichtet und auf einen starren rechteckigen Klotz (18) mit in Richtung des Bodens verengenden Aussparungen (19) gesetzt wird.

5. Verfahren nach Anspruch 2 oder 3, dadurch gekennzeichnet, daß das Band (30) aus einem Kunststoffmaterial hergestellt wird.

6. Verfahren nach Anspruch 2 oder 3, dadurch gekennzeichnet, daß das Band (30) aus Metall besteht.

## Revendications

1. Procédé de fabrication d'un boîtier convenant à un appareil de séparation d'éléments constituants d'un liquide, le boîtier (1) ayant des ouvertures d'entrée (6) et de sortie (8), et un ensemble de plaques parallèles (5) distantes les unes des autres et placées entre les ouvertures d'entrée et de sortie, les plaques faisant un angle prédéterminé par rapport au plan horizontal, et un dispositif (7 et 11 respectivement) destiné à transmettre le liquide à un boîtier et à évacuer les boues, les étapes du procédé commençant par la mise à disposition d'un tube d'un matériau convenable, caractérisé en ce que :
- le tube est découpé dans un plan faisant un angle qui est égal à la moitié de l'angle prédéterminé par rapport à l'axe central,
- les parties de boîtier sont tournées de 180° l'une par rapport à l'autre,
- les parties (4) de bord du tube sont fixées mutuellement, et le boîtier (1) est dressé de manière que l'axe central de la partie inférieure (3) du boîtier soit vertical ou pratiquement vertical et que l'axe central de la partie supérieure (2) du boîtier forme l'angle prédéterminé, l'ensemble de plaques (5) étant destiné à être logé dans la partie supérieure de boîtier.

2. Procédé selon la revendication 1, caractérisé en ce que, pour l'obtention du tube, une bande (30) est enroulée afin qu'elle recouvre un noyau (32),
- les parties de bord de la bande (30) placées l'une sur l'autre sont collées mutuellement, et
- le noyau (32) est retiré.

3. Procédé selon la revendication 2, dans lequel le boîtier (1) a un corps à paroi mince (10) ayant un espace qui se rétrécit vers la partie inférieure, le corps étant collé à l'extrémité inférieure de la partie inférieure de boîtier (3), caractérisé en ce que le corps à paroi mince (10) est formé simultanément avec le boîtier tubulaire à partir de la bande enroulée.

4. Procédé selon la revendication 1, dans lequel le boîtier est dressé et placé sur un bloc rectangulaire plein (18) ayant une cavité (19) qui se rétrécit vers le fond.

5. Procédé selon la revendication 2 ou 3, caractérisé en ce que la bande (30) est fabriquée à partir d'une matière plastique.

6. Procédé selon la revendication 2 ou 3, caractérisé en ce que la bande (30) est formée d'un métal.
